# FASCICULE DE BREVET EUROPEEN

(11) **EP 1 479 582 B1**
(45) Date de publication et mention de la délivrance du brevet: **06.04.2011**
(21) Numéro de dépôt: 04011702.0
(22) Date de dépôt: 17.05.2004
(51) Int. Cl.: B60T 11/236, B60T 11/232

(54) **Maître cylindre pour système de freinage de véhicule automobile avec course morte réduite**
Hauptbremszylinder mit verkürztem Leerweg für eine Kraftfahrzeugbremsanlage
Master cylinder with shortened dead stroke for a vehicle brake system

(30) Priorité: 22.05.2003 FR 0306367
(43) Date de publication de la demande: 24.11.2004
(73) Titulaire: ROBERT BOSCH GMBH, 70442 Stuttgart (DE)
(72) Inventeur: Bourlon, Philippe, 77230 Dammartin En Goele (FR)
(74) Mandataire: Hurwic, Aleksander Wiktor

(56) Documents cités:
- DE-A- 3 445 261
- DE-A- 19 536 326
- DE-A- 19 754 700
- FR-A- 2 829 450
- US-A- 6 012 288

## Description

La présente invention est relative à un maître cylindre pour un système de freinage de véhicule automobile. Plus précisément l'invention concerne la course morte d'un piston dans un maître cylindre. L'invention a pour but de réduire la course morte dans un maître cylindre lors d'un freinage. Elle a pour but supplémentaire de faciliter la réadmission de liquide dans une chambre du maître cylindre.

Actuellement les systèmes de freinage sont munis d'un maître cylindre. Un conducteur appuie sur un organe de commande, par exemple une pédale de frein, qui actionne le maître cylindre. Il est possible d'intercaler entre la pédale de frein et le maître cylindre un servomoteur. Le servomoteur décuple l'effort exercé sur la pédale de frein et transmis au maître cylindre.

Un maître cylindre comporte un corps de maître cylindre de forme générale cylindrique. Le corps du maître cylindre est creux. A l'intérieur du corps du maître cylindre coulissent un piston primaire et un piston secondaire. Le piston primaire est en appui, par l'intermédiaire d'un ressort primaire, contre le piston secondaire tandis que le piston secondaire vient en appui, par l'intermédiaire d'un ressort secondaire, contre un fond du corps de maître cylindre. Une chambre primaire est ménagée entre le piston primaire et le piston secondaire. La chambre primaire contient le ressort primaire. Une chambre secondaire est ménagée entre le fond du maître cylindre et le piston secondaire. La chambre secondaire contient le ressort secondaire. Un réservoir de liquide hydraulique est fixé sur le maître cylindre. Le réservoir communique avec chaque chambre du maître cylindre par un canal de connexion du réservoir.

Pour qu'un maître cylindre fonctionne lors d'un freinage, c'est à dire transforme un effort, le plus souvent musculaire, en une pression hydraulique, il est nécessaire que la pression augmente à l'intérieur du maître cylindre. Au repos, les chambres primaire et secondaire communiquent avec le réservoir qui est hors pression. Les chambres sont remplies de liquide hydraulique provenant du réservoir. Quand la pression s'installe dans une chambre du maître cylindre, le liquide contenu dans la chambre est injecté vers des plaquettes de freins. Pour que cette montée en pression soit possible, il faut que lors du freinage la communication entre la chambre de maître cylindre et son canal de connexion au réservoir soit obturée de manière étanche.

Il est connu pour cela d'utiliser un joint d'étanchéité en forme de coupelle. Le joint est disposé dans un alésage circulaire ménagé en gorge à l'intérieur du corps du maître cylindre. L'alésage est ouvert vers la lumière du maître cylindre. Le joint est fixe. Une lèvre interne du joint, c'est-à-dire celle située du coté de la lumière du maître cylindre, est légèrement plus courte qu'une lèvre externe. La lèvre externe est située contre une paroi circonférentielle de l'alésage. Une base relie les deux lèvres. La base est en appui contre une paroi radiale de l'alésage.

Un orifice de dilatation, et plus généralement compensateur des fuites, est ménagé dans une jupe du piston. En position de repos, l'orifice de dilatation est en regard d'un canal de connexion du réservoir. Il permet le passage de liquide depuis le réservoir vers la chambre correspondante du maître cylindre. L'avancée du piston du maître cylindre, et donc de sa jupe, entraîne l'orifice de dilatation dans la direction d'un fond de maître cylindre. L'orifice de dilatation est alors obturé par la lèvre interne du joint. La chambre est ainsi fermée hermétiquement du côté de l'orifice de dilatation. Le liquide ne peut plus s'échapper par le canal de connexion du réservoir. La pression dans la chambre de maître cylindre monte alors. Si l'action sur une pédale s'exerce plus avant, le liquide est injecté vers les freins par un canal de raccordement.

Il est donc nécessaire que le piston parcoure une certaine distance, appelée course morte, avant que la pression s'installe dans la chambre de maître cylindre. Cette course morte est proportionnelle à une partie du déplacement de la pédale de frein, pendant laquelle aucun freinage n'a lieu. On comprend bien la nécessité de diminuer au maximum cette course morte.

D'une manière générale la course morte est la distance que l'on parcourt avant de monter en pression dans le maître cylindre. C'est donc la distance d'un bord de l'orifice de dilatation jusqu'à la lèvre interne du joint d'étanchéité au moment où l'orifice est obturé de manière étanche. La course morte est grande, du fait de la distance à parcourir par le piston pour obturer de manière étanche la chambre de pression. Cette course est importante du fait de la nécessité d'avoir une section de passage suffisamment importante entre le réservoir et les freins, du fait de la présence de dispositifs de contrôle électronique de la trajectoire (ESP). Ces dispositifs ESP aspirent le liquide de frein du réservoir à travers le maître cylindre. Par conséquent, on ne peut réduire les communications entre le réservoir et le maître cylindre de manière à réduire les courses mortes.

En plus de ce problème de course morte et de temps de freinage, il faut tenir compte de la nécessité de réadmettre rapidement du liquide dans la chambre du maître cylindre. Cette réadmission est nécessaire dans le cas d'un freinage secondaire très proche du freinage primaire.

Actuellement on connaît un maître cylindre muni d'un orifice de dilatation et d'un joint d'étanchéité. La lèvre interne du joint d'étanchéité participe à la course morte et à la réadmission de liquide hydraulique. Il faut donc que la lèvre interne soit longue et souple, afin qu'elle puisse se soulever lors d'une dépression dans le maître cylindre. La lèvre se soulève ce qui permet au liquide d'entrer à nouveau dans la chambre de maître cylindre. Mais du fait de la longueur de la lèvre interne du joint d'étanchéité, la course morte est environ toujours trois fois plus longue que dans d'autres maîtres cylindres utilisant au moins partiellement un autre moyen pour permettre la réadmission. Un tel dispositif de maître cylindre, tel que décrit ci-dessus pose donc un problème de temps de réaction de véhicule lors d'un freinage par un conducteur, notamment lors d'un freinage brusque.

On connaît également un maître cylindre muni d'un orifice de dilatation et d'un clapet. Le clapet est disposé dans une base d'un piston, en appui contre une goupille. La goupille est perpendiculaire à un axe longitudinal du maître cylindre. La goupille est dans un logement ménagé dans le corps du maître cylindre. Au repos le clapet est ouvert. La section du clapet est telle que le liquide hydraulique peut circuler depuis le réservoir de liquide hydraulique jusqu'à la chambre de maître cylindre en passant par les logements de la goupille et du clapet.

Lors d'un freinage, le piston avance jusqu'à fermeture du clapet sur son siège. La distance parcourue par le piston pour que le clapet soit fermé sur son siège représente la course morte. Lors du défreinage, un ressort de clapet se comprime et la réalimentation en liquide de frein se fait par l'orifice d'alimentation et par le clapet. Un tel maître cylindre à clapet est notamment utilisé dans les systèmes anti-blocages, dits ABS. En effet , avec des systèmes ABS, si un joint en coupelle est utilisé, la lèvre se trouvant sous l'orifice de dilatation risque d'être détruite au moment du retour de pression. Le maître cylindre à clapet donne de bons résultats pour la course morte et la réadmission. Cependant le coût d'un maître cylindre à clapet est bien supérieur au coût d'un maître cylindre à joint d'étanchéité et orifice de dilatation.

Il est également connu d'utiliser un maître cylindre dit mixte. Un chambre de maître cylindre est munie d'un clapet, tandis qu'une autre chambre est munie d'un joint d'étanchéité. Le plus souvent une chambre primaire est munie du joint d'étanchéité tandis qu'une chambre secondaire est munie du clapet. En effet, la chambre secondaire est souvent la première à monter en pression. Généralement la montée en pression dans la chambre secondaire suffit à freiner un véhicule.

Cette solution permet d'avoir un système de freinage dont la course morte, pour un freinage classique, est courte et la réalimentation en liquide dans la chambre secondaire rapide. Mais elle ne donne pas de résultats suffisants dans le cas d'un freinage difficile qui nécessite une réactivité rapide des deux chambres du maître cylindre.

DE 197 54 700 décrit un joint en U disposé dans une gorge munie d'un trou relié au réservoir de liquide hydraulique.

L'invention propose un maître cylindre qui ne présente pas les inconvénients ci-dessus. Elle a pour but de fournir un maître cylindre dont la course morte est courte et la réadmission rapide de liquide.

Pour parvenir à ce résultat, on ménage un orifice dans le corps du maître cylindre. Cet orifice permet une communication supplémentaire entre le réservoir et une chambre du maître cylindre. C'est par cet orifice que se fait la réadmission de liquide hydraulique.

Par ailleurs, le joint d'étanchéité est positionné dans le corps du maître cylindre à proximité d'un orifice de dilatation. Du fait de la faible distance que doit parcourir un piston muni de l'orifice de dilatation pour qu'il soit obturé par le joint, la course morte est courte.

L'invention a donc pour objet un maître cylindre pour système de freinage de véhicule automobile comprenant
- un corps (2) de maître cylindre (1), percé d'un alésage dans lequel coulisse au moins un piston (3, 4, 31), ledit piston définissant une chambre (5, 6) de maître cylindre,
- un réservoir fixé au maître cylindre,
- un joint d'étanchéité (16, 17, 20) à section en U, logé dans une gorge (21) ménagée dans le corps du maître cylindre,
- un orifice d'alimentation (11, 13, 34) ménagé dans le corps du maître cylindre et reliant un canal (10, 12, 29) de connexion du réservoir et une chambre (4, 5) de maître cylindre, le maître cylindre comportant un trou d'usinage (18, 19, 28) communiquant avec le réservoir et la gorge accueillant le joint à section en U, le joint à section en U étant muni d'une lèvre externe (23), dirigée vers l'extérieur du maître cylindre et d'une lèvre interne (22), dirigée vers l'alésage du maître cylindre, caractérisé en ce que ladite lèvre externe (23) présente une face externe apte à obturer le trou d'usinage et en ce que le maître-cylindre est muni d'un orifice de dilatation (14, 15, 30) ménagé dans un corps de piston et reliant un canal de connexion du réservoir et une chambre de maître cylindre.

La gorge qui reçoit le joint à section en U peut avoir un volume supérieur à un encombrement du joint lui-même. Ainsi, un espace est ménagé entre une extrémité libre de la lèvre externe et une paroi radiale de la gorge.

Une extrémité de la lèvre interne du joint est préférentiellement accolée à un bord de l'orifice de dilatation. L'orifice de dilatation est ainsi obturé très rapidement par la lèvre interne. La course morte est donc très réduite. La pression dans la chambre correspondante suit donc de façon quasi immédiate une stimulation d'une pédale de frein par un conducteur.

L'invention sera mieux comprise à la lecture de la description qui suit et à l'examen des figures qui l'accompagnent. Celles ci ne sont présentées qu'à titre indicatif et nullement limitatif de l'invention. Les figures montrent :
- Figure 1 : une représentation générale d'un maître cylindre conforme à l'invention ;
- Figure 2 : un agrandissement d'un joint d'étanchéité conforme à l'invention, le maître cylindre étant en position repos ;
- Figure 3 : un agrandissement d'un joint d'étanchéité conforme à l'invention, le maître cylindre étant sous pression ;
- Figure 4 : un agrandissement d'un joint d'étanchéité conforme à l'invention lors d'une dépression dans la chambre de maître cylindre.

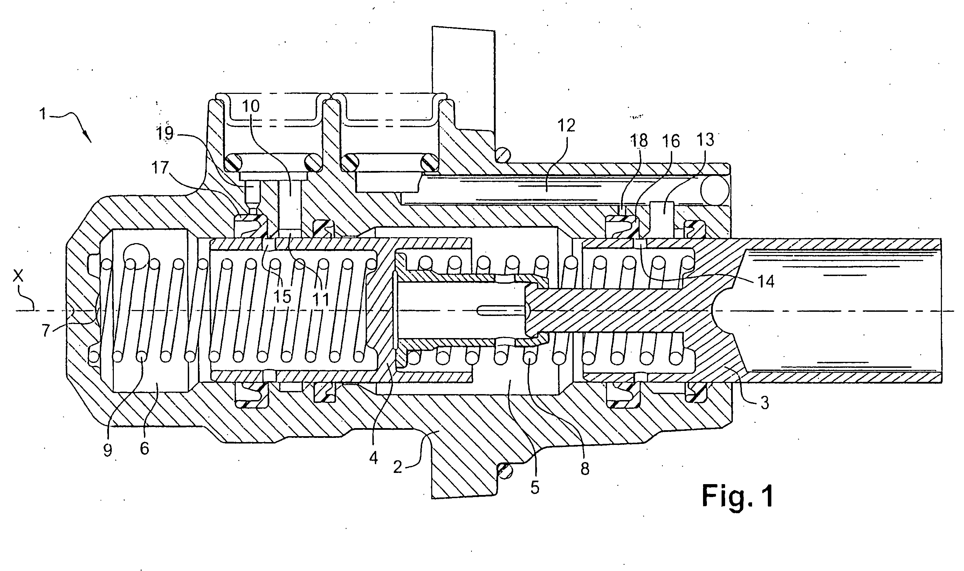

La figure 1 montre un maître cylindre 1 muni d'un joint 16 et 17 à lèvre d'étanchéité ayant une section en U. Le maître cylindre 1 est muni d'un corps 2 de maître cylindre d'axe X. Le corps 2 de maître cylindre est percé d'un alésage longitudinal d'axe X. Un réservoir (non représenté) est fixé sur le maître cylindre 1. Un piston primaire 3 coulisse dans l'alésage du maître cylindre 1 en direction d'un piston secondaire 4. Un chambre primaire 5 est délimitée par le piston primaire 3 et le piston secondaire 4. Une chambre secondaire 6 est délimitée par le piston secondaire 4 et un fond 7 du maître cylindre.

Le maître cylindre 1 comporte, par exemple, sur une partie supérieure deux piquages. Le réservoir est fixé au maître cylindre 1 par des extensions tubulaires formées sur le réservoir et introduites dans les piquages. Un piquage, donc le réservoir hydraulique, communique avec la chambre secondaire 6 par l'intermédiaire d'un canal de raccordement 10 et d'un orifice d'alimentation 11. Un autre piquage communique avec la chambre primaire 5 par l'intermédiaire d'un canal de raccordement 12 et d'un orifice d'alimentation 13. Le réservoir peut être fixé au maître cylindre par tout autre moyen connu, tel qu'un vissage, un clipsage...

Le piston primaire 3 comporte une jupe, munie d'un orifice 14 nommé orifice de dilatation primaire. Une jupe du piston secondaire est également muni d'un orifice 15 de dilatation. En position repos, c'est-à-dire lorsque le maître cylindre n'est pas actionné, la position des pistons primaire et secondaire est telle que les orifices de dilatation 14 et 15 sont ouverts. Ils communiquent respectivement avec les orifices d'alimentation 11 et 13, et avec les chambres primaire 5 et secondaire 6.

Pour que la montée en pression dans les chambres primaire et secondaire soit possible, et que le freinage ait lieu, il est nécessaire que la communication entre l'orifice d'alimentation et l'orifice de dilatation soit obturée de manière étanche. Les chambres 5 et 6 du maître cylindre 1 sont alors isolées de la pression atmosphérique. Le volume des chambres 5 et 6 diminue au fur et à mesure que les pistons 3 et 4 correspondants avancent à l'intérieur du corps 2. La pression dans les chambres augmente.

On appelle course morte la distance qu'un piston doit parcourir pour que l'orifice de dilatation qu'il comporte soit obturé de manière étanche par un moyen d'étanchéité.

Dans l'invention, et tel que cela est représenté à la figure 1, le moyen d'étanchéité est formé par un joint 16, 17 à lèvre d'étanchéité à section en U. Ce joint 16, 17 est logé dans le corps 2 du maître cylindre, dans une gorge pratiquée dans la paroi de l'alésage.

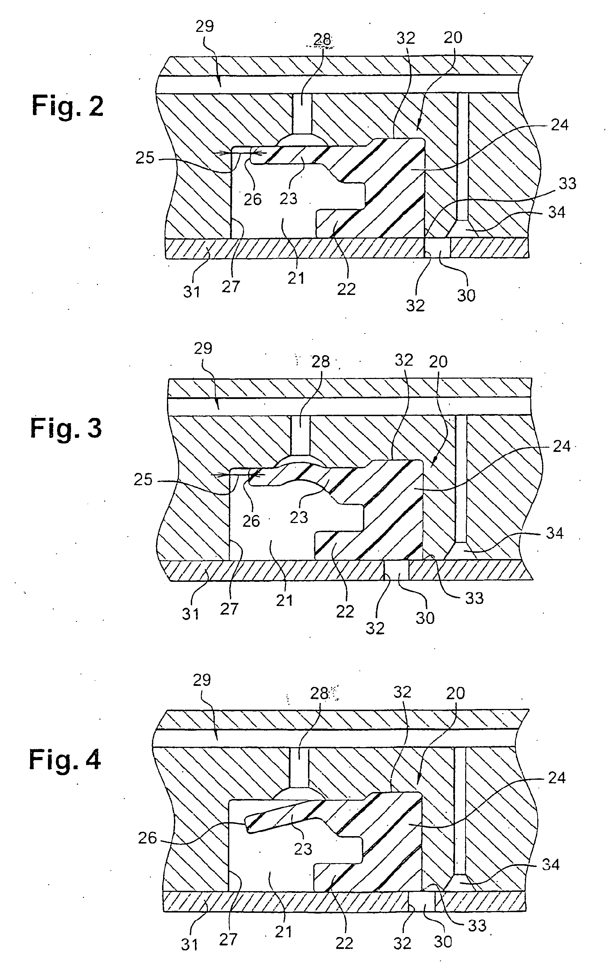

Sur les figures 2, 3 et 4 est représenté un agrandissement d'un joint d'étanchéité 20 dans une gorge 21 conformément à l'invention. Le joint 20 peut être situé dans une gorge 21 au niveau de la chambre primaire 5 et ou secondaire 6. Le joint 20 est le même que les joints 16 et 17 de la figure 1. Un orifice de dilatation 30 est ménagé sur une jupe d'un piston 31, équivalent aux orifices 14 et 15 des pistons 3 et 4 de la figure 1.

Le joint 20 est muni d'une lèvre interne 22 et d'une lèvre externe 23. Par interne on entend côté alésage du maître cylindre, et par externe côté corps du maître cylindre. Une base 24 relie la lèvre interne 22 à la lèvre externe 23. La lèvre externe 23 repose contre une paroi de la gorge 21.

Dans un exemple de réalisation préféré, et tel que représenté sur les figures 1 à 4, la lèvre externe est en appui contre une paroi circonférentielle du corps 2. La lèvre interne 22 est préférentiellement plus courte que la lèvre externe 23.

La gorge 21 a un volume supérieur à un encombrement du joint 20 à section en U. Un espace 25 est ainsi ménagé entre une extrémité libre 26 de la lèvre externe 23 et une paroi radiale 27 de la gorge 21.

Un trou d'usinage 28 permet une communication entre la gorge 21 et le réservoir hydraulique par l'intermédiaire d'un canal 29 de raccordement.

En position repos, et tel que cela est représenté sur la figure 2, la lèvre externe 23 est située contre le trou d'usinage 28. Le trou d'usinage 28 n'est pas obturé de manière étanche. De même, un orifice d'alimentation 34 est ouvert. Du liquide hydraulique peut notamment passer dans la chambre de maître cylindre 5 et 6 par l'intermédiaire du trou d'usinage 28. La gorge 21 est remplie de liquide hydraulique, qui peut s'échapper vers la chambre de maître cylindre par l'orifice de dilatation 30.

Sur la figure 3 est représenté un même agrandissement que sur la figure 2. Le piston 31 a glissé à l'intérieur du corps 2 de maître cylindre 1. L'orifice de dilatation 30 est obturé coté corps du maître cylindre par une face interne de la lèvre interne 22 du joint d'étanchéité 20. L'orifice d'alimentation 34 est également obturé par l'avancée du piston. Le liquide hydraulique ne peut plus pénétrer dans la chambre de pression. Le volume de la chambre, du fait de l'avancé du piston de maître cylindre, diminue. La pression à l'intérieur de la chambre de maître cylindre augmente. La lèvre externe 23 est plaquée contre le trou d'usinage 28. Le trou d'usinage 28 est ainsi obturé de façon étanche par la lèvre 23. Aucun liquide provenant du canal 29 de raccordement du réservoir ne peut pénétrer dans la gorge 21.

Selon un exemple de réalisation préféré, et tel que cela est représenté sur la figure 2, un rebord 32 de l'orifice de dilatation 30 est très près d'une extrémité 33 de la base 24 portant la lèvre interne 22. L'extrémité 33 est dans le prolongement du rebord 32. La lèvre 22 peut être petite et rigide. La course morte qui est ici représentée par la distance depuis le bord 32 de l'orifice 30 jusqu'à la lèvre 22 au moment où l'orifice est étanche, est très courte. Ceci est notamment permis par le fait que la lèvre interne est rigide et courte.

Jusqu'à présent la longueur de la lèvre interne était d'une longueur supérieure à celle de l'invention. En effet dans l'état de la technique, cette lèvre interne doit également permettre la réadmission de liquide hydraulique. Elle doit être d'une longueur suffisante, afin de ne pas être aspirée par l'orifice de dilatation lors de la dépression qui s'effectue lorsque la pédale de frein est relâchée.

Le fait de découpler les deux fonctions, c'est à dire qu'une lèvre interne 22 participe à la course morte tandis qu'une lèvre externe 23 participe à l'étanchéité avec le réservoir et à la réadmission de liquide hydraulique, permet de réduire fortement la course morte. Une telle solution n'augmente pas le coût de fabrication d'un maître cylindre. En effet, bien que les deux fonctions soient découplées, elles sont réalisées par une même pièce.

Sur la figure 4 est représenté le joint d'étanchéité 20 lorsque le piston 31 est relâché. Par un phénomène de dépression, la lèvre externe 23 se décolle du trou d'usinage 24. Ce décollage est possible notamment du fait que la lèvre 23 est longue et souple et qu'un espace 25 a été ménagé entre l'extrémité 26 de la lèvre et la gorge 17. Ainsi, alors que l'orifice de dilatation 30 ne communique pas encore avec un orifice d'alimentation 34, une alimentation de la chambre en liquide hydraulique est possible. En effet, le liquide hydraulique peut à nouveau s'engouffrer dans la gorge 21 par l'intermédiaire du trou d'usinage 28.

Dans l'état de la technique, tant que l'orifice de dilatation n'est pas en communication avec l'orifice d'alimentation, la chambre de maître cylindre ne peut pas réadmettre de liquide. Quand tout le liquide hydraulique a été utilisé lors d'un premier freinage, un second freinage très rapproché ne donne pas satisfaction. En effet tout le liquide est allé vers des plaquettes de freins et la réadmission de liquide hydraulique entre les deux freinages n'est pas suffisante. La pédale de frein s'enfonce sans possibilité de freiner de façon correcte la deuxième fois.

Dans un exemple de réalisation particulier, la lèvre externe 23 est souple. Ainsi elle se soulève facilement lors de la montée en pression, et se décolle lors de la phase de dépression.

Un joint d'étanchéité à section en U conforme à l'invention, s'obtient notamment par moulage.

Le joint peut être en caoutchouc.

Dans un exemple de réalisation particulier, le trou d'usinage 28 a un diamètre de 0,5 à 0,9 mm, par exemple 0,7 mm. Les dimensions du joint d'étanchéité 20 sont de 4 à 5 mm par 3 à 3,5 mm, par exemple 4,5 mm par 3,2 mm. L'espace 25 entre l'extrémité libre 26 de la lèvre externe 23 et la face radiale de la gorge est de 0,2 à 0,7 mm, par exemple 0,5mm. La plus petite distance entre la lèvre interne 22 et la lèvre externe 23 est comprise entre 0,5 et 1 mm, par exemple 0,8 mm.

Il est possible de prévoir un bossage 32 formant un cran. Un tel bossage 32 empêche le joint 20 d'avancer dans la gorge 21. En effet, la gorge 21 étant plus grande que le joint 20, il est nécessaire que le joint 20 soit fixé et ne se déplace pas. Le bossage 32 est retenu dans une encoche ménagée dans le corps 2 du maître cylindre 1. Par exemple, l'encoche prolonge la gorge 21 au niveau d'une paroi supérieure. Dans ce cas, le bossage 32 est formé sur une paroi externe de la base 20. L'encoche peut également être ménagée dans une paroi radiale de la gorge.

Il n'est pas obligatoire que toutes les chambres du maître cylindre soient munies d'un joint d'étanchéité conforme à l'invention. Généralement la chambre secondaire est la première à monter en pression. On peut donc préférentiellement munir la chambre secondaire d'un joint d'étanchéité et d'un trou d'usinage de l'invention, afin d'avoir une course morte réduite et de monter le plus rapidement en pression. La chambre primaire peut, elle, être munie d'un joint d'étanchéité classique ou d'un système à clapet tel que décrit dans l'état de la technique.

L'invention s'applique également dans le cas d'un maître cylindre muni d'une unique chambre et d'un unique piston.

## Revendications

1. Maître cylindre pour système de freinage de véhicule automobile comprenant
- un corps (2) de maître cylindre (1), percé d'un alésage dans lequel coulisse au moins un piston (3, 4, 31), ledit piston définissant une chambre (5, 6) de maître cylindre,
- un réservoir fixé au maître cylindre,
- un joint d'étanchéité (16, 17, 20) à section en U, logé dans une gorge (21) ménagée dans le corps du maître cylindre,
- un orifice d'alimentation (11, 13, 34) ménagé dans le corps du maître cylindre et reliant un canal (10, 12, 29) de connexion du réservoir et une chambre (4, 5) de maître cylindre, le maître cylindre comportant un trou d'usinage (18, 19, 28) communiquant avec le réservoir et la gorge accueillant le joint à section en U, le joint à section en U étant muni d'une lèvre externe (23), dirigée vers l'extérieur du maître cylindre et d'une lèvre interne (22), dirigée vers l'alésage du maître cylindre **caractérisé en ce que** ladite lèvre externe (23) présente une face externe apte à obturer le trou d'usinage et **en ce que** le maître-cylindre est muni d'un orifice de dilatation (14, 15, 30) ménagé dans un corps de piston et reliant un canal de connexion du réservoir et une chambre de maître cylindre.

2. Maître cylindre selon la revendication1, **caractérisé en ce que** la lèvre interne du joint à section en U est courte et rigide, et sa lèvre externe est longue et souple.

3. Maître cylindre selon les revendications 1 et 2, **caractérisé en ce que** la gorge recevant le joint à section en U est d'un volume supérieur à l'encombrement du joint, un espace (25) étant formé entre une extrémité (26) libre de la lèvre externe et une paroi (27) de la gorge.

4. Maître cylindre selon l'une des revendications 1 à 3, **caractérisé en ce qu'**en position repos la face externe de la lèvre externe est contre le trou d'usinage de manière non étanche.

5. Maître cylindre selon l'une des revendications 1 à 4, **caractérisé en ce que** la face externe de la lèvre externe est plaquée de manière étanche contre le trou d'usinage quand une chambre de maître cylindre correspondante monte en pression.

6. Maître cylindre selon l'une des revendications 1 à 5, **caractérisé en ce qu'**une extrémité (33) de la lèvre interne, reliée à une base (24) du joint à section en U, est dans le prolongement d'un rebord (32) de l'orifice d'alimentation, l'orifice d'alimentation étant ouvert quand le maître cylindre est en position repos.

7. Maître cylindre selon l'une des revendications 1 à 6, **caractérisé en ce que** le joint d'étanchéité est en caoutchouc.

8. Maître cylindre selon l'une des revendications 1 à 7, **caractérisé en ce que** le joint d'étanchéité comporte un bossage (32) formant un cran retenu par une encoche ménagée dans le corps de maître cylindre dans un prolongement de la gorge.

## Claims

1. Master cylinder for automotive vehicle braking system comprising
- a master cylinder (1) body (2), pierced with a bore in which there slides at least one piston (3, 4, 31), the said piston defining a master cylinder chamber (5, 6),
- a reservoir fixed to the master cylinder,
- a U-section seal (16, 17, 20), housed in a groove (21) formed in the master cylinder body,
- a supply orifice (11, 13, 34) formed in the master cylinder body and connecting a reservoir connection channel (10, 12, 29) to a master cylinder chamber (4, 5), the master cylinder comprising a machined hole (18, 19, 28) communicating with the reservoir, and with the groove housing the U-section seal, the U-section seal being equipped with an outer lip (23), facing towards the outside of the master cylinder and with an inner lip (22) facing towards the bore of the master cylinder, **characterized in that** the said outer lip (23) has an outer face able to close off the machined hole, and **in that** the master cylinder is equipped with an expansion orifice (14, 15, 30) formed in a piston body and connecting a reservoir connecting channel to a master cylinder chamber.

2. Master cylinder according to Claim 1, **characterized in that** the inner lip of the U-section seal is short and rigid and its outer lip is long and flexible.

3. Master cylinder according to Claims 1 and 2, **characterized in that** the groove housing the U-section seal is of a volume greater than the size of the seal, a space (25) being formed between a free end (26) of the outer lip and a wall (27) of the groove.

4. Master cylinder according to one of Claims 1 to 3, **characterized in that**, in the rest position, the outer face of the outer lip is against the machined hole in a non-sealed manner.

5. Master cylinder according to one of Claims 1 to 4, **characterized in that** the outer face of the outer lip is pressed in a sealed manner firmly against the machined hole when a corresponding master cylinder chamber increases in pressure.

6. Master cylinder according to one of Claims 1 to 5, **characterized in that** one end (33) of the inner lip, which is connected to a base (24) of the U-section seal, is in the continuation of a rim (32) of the supply orifice, the supply orifice being open when the master cylinder is in the rest position.

7. Master cylinder according to one of Claims 1 to 6, **characterized in that** the seal is made of rubber.

8. Master cylinder according to one of Claims 1 to 7, **characterized in that** the seal comprises a boss (32) that forms a catch retained by a notch formed in the master cylinder body in a continuation of the groove.

## Patentansprüche

1. Hauptbremszylinder für Kraftfahrzeugbremsanlage, mit
- einem Körper (2) des Hauptbremszylinders (1), der von einer Bohrung durchbrochen ist, in welcher mindestens ein Kolben (3, 4, 31) gleitet, wobei der Kolben eine Hauptbremszylinderkammer (5, 6) definiert,
- einem am Hauptbremszylinder befestigten Behälter,
- einer Dichtung (16, 17, 20) mit U-förmigem Querschnitt, die in einer im Hauptbremszylinderkörper ausgebildeten Nut (21) aufgenommen ist,
- einer Speiseöffnung (11, 13, 34), die im Hauptbremszylinderkörper ausgebildet ist und einen Verbindungskanal (10, 12, 29) des Behälters und eine Hauptbremszylinderkammer (4, 5) verbindet, wobei der Hauptbremszylinder ein Bearbeitungsloch (18, 19, 28) aufweist, das mit dem Behälter und der die Dichtung mit U-förmigen Querschnitt aufnehmenden Nut verbunden ist, wobei die Dichtung mit U-förmigen Querschnitt mit einer zur Außenseite des Hauptbremszylinders gerichteten Außenlippe (23) und einer zur Bohrung des Hauptbremszylinders gerichteten Innenlippe (22) versehen ist, **dadurch gekennzeichnet, dass** die Außenlippe (23) eine Außenseite aufweist, die das Bearbeitungsloch verschließen kann, und dass der Hauptbremszylinder mit einer Expansionsöffnung (14, 15, 30) versehen ist, die in einem Kolbenkörper ausgebildet ist und einen Verbindungskanal des Behälters mit einer Hauptbremszylinderkammer verbindet.

2. Hauptbremszylinder nach Anspruch 1, **dadurch gekennzeichnet, dass** die Innenlippe der Dichtung mit U-förmigen Querschnitt kurz und starr und ihre Außenlippe lang und biegsam ist.

3. Hauptbremszylinder nach den Ansprüchen 1 und 2, **dadurch gekennzeichnet, dass** die die Dichtung mit U-förmigen Querschnitt aufnehmende Nut ein größeres Volumen als die Abmessung der Dichtung hat, wobei ein Raum (25) zwischen einem freien Ende (26) der Außenlippe und einer Wand (27) der Nut gebildet ist.

4. Hauptbremszylinder nach einem der Ansprüche 1 bis 3, **dadurch gekennzeichnet, dass** in der Ruhestellung die Außenseite der Außenlippe in nicht dichter Weise gegen das Bearbeitungsloch anliegt.

5. Hauptbremszylinder nach einem der Ansprüche 1 bis 4, **dadurch gekennzeichnet, dass** die Außenseite der Außenlippe gegen das Bearbeitungsloch in dichter Weise anliegt, wenn der Druck in einer entsprechender Hauptbremszylinderkammer steigt.

6. Hauptbremszylinder nach einem der Ansprüche 1 bis 5, **dadurch gekennzeichnet, dass** ein Ende (33) der Innenlippe, das mit einer Basis (24) der Dichtung mit U-förmigen Querschnitt verbunden ist, in der Verlängerung eines Randes (32) der Speiseöffnung liegt, wobei die Speiseöffnung geöffnet ist, wenn sich der Hauptbremszylinder in der Ruhestellung befindet.

7. Hauptbremszylinder nach einem der Ansprüche 1 bis 6, **dadurch gekennzeichnet, dass** die Dichtung aus Gummi besteht.

8. Hauptbremszylinder nach einem der Ansprüche 1 bis 7, **dadurch gekennzeichnet, dass** die Dichtung einen Buckel aufweist (32), der eine Raste bildet, der von einer im Hauptbremszylinderkörper in einer Verlängerung der Nut ausgebildeten Kerbe gehalten ist.
